# EUROPEAN PATENT APPLICATION

(11) **EP 4 786 237 A1**
(43) Date of publication of application: **05.08.2026**
(21) Application number: 24869590.0
(22) Date of filing: 22.02.2024
(51) Int. Cl.: B60K 6/26, B60K 6/36, B60K 6/50

(54) **HYBRID DRIVE SYSTEM AND VEHICLE**

(30) Priority: 25.09.2023 CN 202322607219 U
(71) Applicant: BYD Company Limited, Shenzhen, Guangdong 518118 (CN)
(72) Inventor: YANG, Dongsheng, Shenzhen, Guangdong 518118 (CN); ZHU, Futang, Shenzhen, Guangdong 518118 (CN); ZHANG, Hui, Shenzhen, Guangdong 518118 (CN); DUAN, Yubo, Shenzhen, Guangdong 518118 (CN); WANG, Chunsheng, Shenzhen, Guangdong 518118 (CN)
(74) Representative: Mathys & Squire
(86) International application number: PCT/CN2024/078173
(87) International publication number: WO 2025/066018

(57) **Abstract**

A hybrid drive system and a vehicle are provided. The system includes an engine, a first motor, a first motor secondary drive gear, an engine secondary drive gear, and an engine secondary driven gear. The engine is drivingly connected to the engine secondary drive gear, the first motor is drivingly connected to the first motor secondary drive gear, and the engine secondary drive gear is respectively meshed with the first motor secondary drive gear and the engine secondary driven gear.

## Description

### CROSS-REFERENCE TO RELATED APPLICATIONS

The present disclosure claims priority to Chinese Patent Application No. 202322607219.5, filed with the China National Intellectual Property Administration on September 25, 2023 and entitled "HYBRID DRIVE SYSTEM AND VEHICLE", which is incorporated herein by reference in its entirety.

### TECHNICAL FIELD

The present disclosure relates to the field of hybrid technologies, and specifically, to a hybrid drive system and a vehicle.

### BACKGROUND

With development of battery, motor, and electronic control technologies and improvement of charging facilities, hybrid vehicles are increasingly relying more on electric power and reducing the use of an internal combustion engines. A typical series-parallel architecture implements an efficient operation of the vehicle in all scenarios: a pure electric mode is used for a high battery level, a series mode is used for a low battery level and a low speed, a direct drive mode is used for a high speed, and the engine with a primary gear meets the requirement of commonly used vehicle speeds in domestic markets. At present, the structure of a hybrid drive system of a vehicle is complex, which is inconducive to vehicle packaging.

### SUMMARY

To overcome a problem in the related technologies, the present disclosure provides a hybrid drive system and a vehicle.

To achieve the foregoing objective, according to a first aspect, the present disclosure provides a hybrid drive system, including an engine, a first motor, a first motor secondary drive gear, an engine secondary drive gear, and an engine secondary driven gear. The engine is drivingly connected to the engine secondary drive gear, the first motor is drivingly connected to the first motor secondary drive gear, and the engine secondary drive gear is respectively meshed with the first motor secondary drive gear and the engine secondary driven gear.

Optionally, the system further includes a first gear shift mechanism, a first motor shaft, and a first motor primary drive gear. The first motor primary drive gear and the first motor secondary drive gear are respectively idly sleeved on the first motor shaft, the first gear shift mechanism is disposed on the first motor shaft, and is located between the first motor primary drive gear and the first motor secondary drive gear, the first gear shift mechanism is selectively engaged with the first motor primary drive gear or the first motor secondary drive gear, and the first motor shaft is connected to the first motor.

Optionally, the system further includes a clutch, an engine output shaft, and an engine primary drive gear. The engine output shaft is connected to the engine, the engine secondary drive gear is idly sleeved on the engine output shaft, the engine primary drive gear is fixedly connected to the engine output shaft, the clutch is disposed on the engine output shaft, a drive end of the clutch is connected to the engine, a driven end of the clutch is connected to the engine secondary drive gear, and the engine primary drive gear is meshed with the first motor primary drive gear.

Optionally, the system further includes a differential, an intermediate shaft, and a second motor. The engine secondary driven gear is connected to the intermediate shaft; and the differential is respectively mechanically connected to the intermediate shaft and the second motor.

Optionally, the system further includes a second motor shaft, a second motor reduction gear shaft, a second motor primary reduction driven gear, a second motor secondary reduction drive gear, a shaft gear, an intermediate shaft reduction drive gear fixedly connected to the intermediate shaft, and a main reduction gear disposed on the differential. The second motor primary reduction driven gear and the second motor secondary reduction drive gear are respectively fixedly connected to the second motor reduction gear shaft, the shaft gear is fixedly connected to the second motor shaft, and the second motor shaft is connected to the second motor; and the second motor primary reduction driven gear is meshed with the shaft gear, and the main reduction gear is respectively meshed with the intermediate shaft reduction drive gear and the second motor secondary reduction drive gear.

Optionally, the first motor primary drive gear, the engine primary drive gear, the intermediate shaft reduction drive gear, the main reduction gear, and the second motor secondary reduction drive gear axially overlap with each other, and the first motor secondary drive gear, the engine secondary drive gear, the engine secondary driven gear, the second motor primary reduction driven gear, and the shaft gear axially overlap with each other.

Optionally, the system further includes an engine primary driven gear and a second gear shift mechanism. The engine primary driven gear is idly sleeved on the intermediate shaft, the engine secondary driven gear is idly sleeved on the intermediate shaft, the second gear shift mechanism is disposed on the intermediate shaft, and is located between the engine secondary driven gear and the engine primary driven gear, and the engine primary driven gear is located between the second gear shift mechanism and the intermediate shaft reduction drive gear; and the engine primary drive gear is meshed with the engine primary driven gear.

Optionally, the first motor primary drive gear, the engine primary drive gear, the engine primary driven gear, the second motor primary reduction driven gear, and the shaft gear axially overlap with each other, the first motor secondary drive gear, the engine secondary drive gear, and the engine secondary driven gear axially overlap with each other, and the intermediate shaft reduction drive gear, the main reduction gear, and the second motor secondary reduction drive gear axially overlap with each other.

Optionally, the first motor secondary drive gear is disposed close to the engine, and the first motor primary drive gear is disposed away from the engine.

Optionally, the system further includes a torsional shock absorber disposed between the drive end of the clutch and the engine.

Optionally, the first gear shift mechanism is a synchronizer or an engagement sleeve gear shift mechanism.

According to a second aspect, the present disclosure provides a vehicle, including the hybrid drive system provided in the first aspect of the present disclosure.

In the foregoing technical solution, the engine secondary drive gear is respectively meshed with the first motor secondary drive gear and the engine secondary driven gear. In this way, the engine secondary drive gear is used as an idler gear (that is, rotating passively) when the first motor performs driving, and is used as a speed gear (that is, rotating actively) when the engine performs driving. Therefore, the engine secondary driven gear needs to be meshed with only the engine secondary drive gear, without having to be simultaneously meshed with both the first motor secondary drive gear and the engine secondary drive gear to meet driving of the first motor and driving of the engine. Therefore, the problem that a setting position of the engine secondary driven gear is greatly limited due to the need for simultaneously meshing with two gears can be avoided, so that packaging of the engine secondary driven gear is freer, an overall structure of the hybrid drive system is simpler and more compact, and vehicle packaging is more convenient and flexible.

Other features and advantages of the present disclosure will be described in detail in the subsequent description of embodiments.

### BRIEF DESCRIPTION OF DRAWINGS

The accompanying drawings are intended to provide a further understanding of the present disclosure and constitute a part of the specification, and are used together with the following specific implementations to explain the present disclosure, but do not constitute a limitation on the present disclosure. In the accompanying drawings:
FIG. 1 is a block diagram of a hybrid drive system according to an example embodiment;
FIG. 2 is a schematic diagram of a structure of a hybrid drive system according to an example embodiment;
FIG. 3 is a schematic diagram of a structure of a hybrid drive system according to another example embodiment;
FIG. 4 is a schematic diagram of a structure of a hybrid drive system according to another example embodiment;
FIG. 5 is a schematic diagram of energy transmission in a single-motor drive mode according to an example embodiment;
FIG. 6 is a schematic diagram of energy transmission in a dual-motor drive mode according to an example embodiment;
FIG. 7 is a schematic diagram of energy transmission in a series mode according to an example embodiment;
FIG. 8 is a schematic diagram of energy transmission in a parallel mode according to an example embodiment;
FIG. 9 is a schematic diagram of energy transmission in a three-power source mode according to an example embodiment;
FIG. 10 is a schematic diagram of energy transmission in a dual-motor feedback mode according to an example embodiment;
FIG. 11 is a schematic diagram of a structure of a hybrid drive system according to another example embodiment;
FIG. 12 is a schematic diagram of energy transmission in a single-motor drive mode according to another example embodiment;
FIG. 13 is a schematic diagram of energy transmission in a dual-motor drive mode according to another example embodiment;
FIG. 14 is a schematic diagram of energy transmission in a series mode according to another example embodiment;
FIG. 15 is a schematic diagram of energy transmission in a parallel primary single-motor mode according to an example embodiment;
FIG. 16 is a schematic diagram of energy transmission in parallel primary dual-motor mode according to an example embodiment;
FIG. 17 is a schematic diagram of energy transmission in parallel primary dual-motor mode according to another example embodiment;
FIG. 18 is a schematic diagram of energy transmission in a parallel secondary single-motor mode according to an example embodiment;
FIG. 19 is a schematic diagram of energy transmission in a parallel secondary dual-motor mode according to an example embodiment; and
FIG. 20 is a schematic diagram of energy transmission in a parallel secondary dual-motor mode according to another example embodiment.

### Descriptions of reference numerals:

| | | | |
|---|---|---|---|
| 1 | engine | 2 | first motor |
| 3 | first gear shift mechanism | 4 | Differential |
| 5 | clutch | 6 | intermediate shaft |
| 7 | engine output shaft | 8 | first motor shaft |
| 9 | first motor primary drive gear | 10 | first motor secondary drive gear |
| 11 | engine secondary drive gear | 12 | engine secondary driven gear |
| 13 | engine primary drive gear | 14 | second motor |

| | | | |
|---|---|---|---|
| 15 | second motor shaft | 16 | second motor reduction gear shaft |
| 17 | second motor primary reduction driven gear | 19 | shaft gear |
| 18 | second motor secondary reduction drive gear | 20 | intermediate shaft reduction drive gear |
| 21 | main reduction gear | 22 | engine primary driven gear |
| 23 | second gear shift mechanism | 24 | torsional shock absorber |
| 100 | hybrid drive system | | |

### DESCRIPTION OF EMBODIMENTS

The particular implementations of the present disclosure will be described in detail below in combination with the accompanying drawings. It will be understood that the particular implementations described herein are merely intended to describe and explain the present disclosure and are not intended to limit the present disclosure.

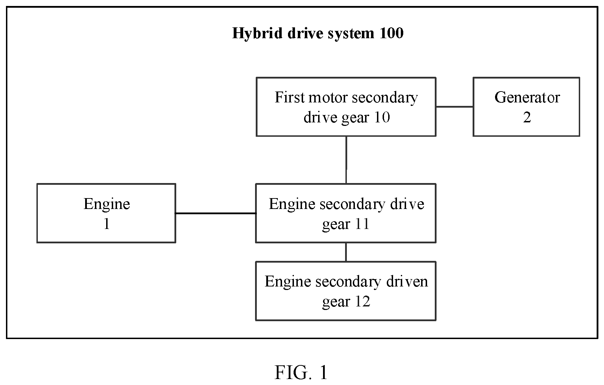

FIG. 1 is a block diagram of a hybrid drive system according to an example embodiment. As shown in FIG. 1, the hybrid drive system 100 may include an engine 1, a first motor 2, a first motor secondary drive gear 10, an engine secondary drive gear 11, and an engine secondary driven gear 12.

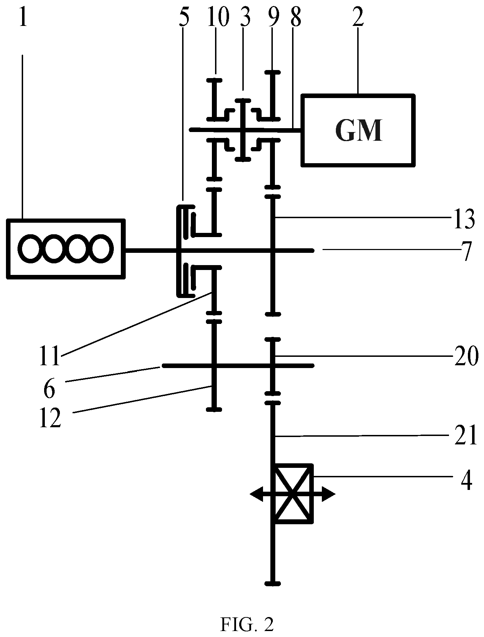

As shown in FIG. 1 and FIG. 2, the engine 1 is drivingly connected to the engine secondary drive gear 11, the first motor 2 is drivingly connected to the first motor secondary drive gear 10, and the engine secondary drive gear 11 is respectively meshed with the first motor secondary drive gear 10 and the engine secondary driven gear 12.

In the present disclosure, the first motor 2 may be a generator, configured to connect to a battery (not shown in FIG. 1).

In the foregoing technical solution, the engine secondary drive gear is respectively meshed with the first motor secondary drive gear and the engine secondary driven gear. In this way, the engine secondary drive gear is used as an idler gear (that is, rotating passively) when the first motor performs driving, and is used as a speed gear (that is, rotating actively) when the engine performs driving. Therefore, the engine secondary driven gear needs to be meshed with only the engine secondary drive gear, without having to be simultaneously meshed with both the first motor secondary drive gear and the engine secondary drive gear to meet driving of the first motor and driving of the engine. Therefore, the problem that a setting position of the engine secondary driven gear is greatly limited due to the need for simultaneously meshing with two gears can be avoided, so that packaging of the engine secondary driven gear is freer, an overall structure of the hybrid drive system is simpler and more compact, and vehicle packaging is more convenient and flexible.

As shown in FIG. 2, the hybrid drive system may further include a first gear shift mechanism 3, a first motor shaft 8, and a first motor primary drive gear 9.

As shown in FIG. 2, the first motor primary drive gear 9 and the first motor secondary drive gear 10 are respectively idly sleeved on the first motor shaft 8, the first gear shift mechanism 3 is disposed on the first motor shaft 8, and is located between the first motor primary drive gear 9 and the first motor secondary drive gear 10, the first gear shift mechanism 3 is selectively engaged with the first motor primary drive gear 9 or the first motor secondary drive gear 10, and the first motor shaft 8 is connected to the first motor 2.

In the present disclosure, the first gear shift mechanism 3 may be a synchronizer (as shown in FIG. 2 to FIG. 4, and FIG. 11) or an engagement sleeve gear shift mechanism. An output end of the first motor 2 is selectively connected to the first motor primary drive gear 9 or the first motor secondary drive gear 10 by using the first gear shift mechanism 3. When the engine 1 needs to be started or the engine 1 needs to drive the first motor 2 to generate electricity, the first gear shift mechanism 3 may be engaged with the first motor primary drive gear 9. When the first motor 2 needs to drive wheels, the first gear shift mechanism 3 may be engaged with the first motor secondary drive gear 10.

As shown in FIG. 2, the hybrid drive system may further include a clutch 5, an engine output shaft 7, and an engine primary drive gear 13.

As shown in FIG. 2, the engine output shaft 7 is connected to the engine 1, the engine secondary drive gear 11 is idly sleeved on the engine output shaft 7, the engine primary drive gear 13 is fixedly connected to the engine output shaft 7, the clutch 5 is disposed on the engine output shaft 7, a drive end of the clutch 5 is connected to the engine 1, a driven end of the clutch 5 is connected to the engine secondary drive gear 11, and the engine primary drive gear 13 is meshed with the first motor primary drive gear 9.

Only the engine primary drive gear and the engine secondary drive gear need to be disposed on the engine shaft. In comparison with a system in which three gears are disposed, a length of the engine shaft can be shortened. Therefore, a system structure is more compact, system drag losses can be reduced, and system power performance can be improved.

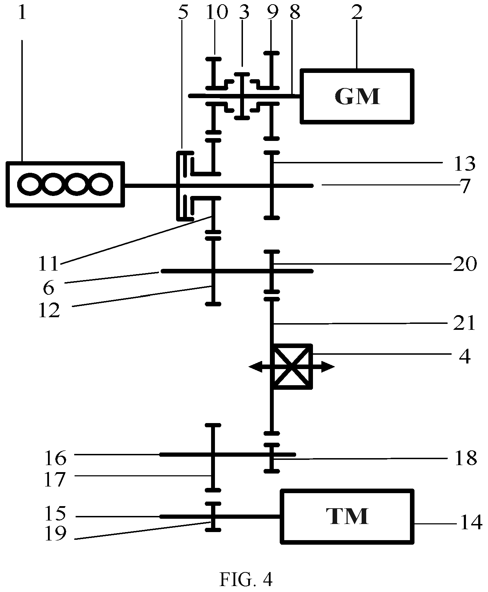

As shown in FIG. 4, the hybrid drive system may further include a differential 4, an intermediate shaft 6, and a second motor 14. To increase combustion efficiency of the engine to a greatest extent, the second motor 14 is disposed in the hybrid drive system.

As shown in FIG. 4, the engine secondary driven gear 12 is connected to the intermediate shaft 6, and the differential 4 is respectively mechanically connected to the intermediate shaft 6 and the second motor 14.

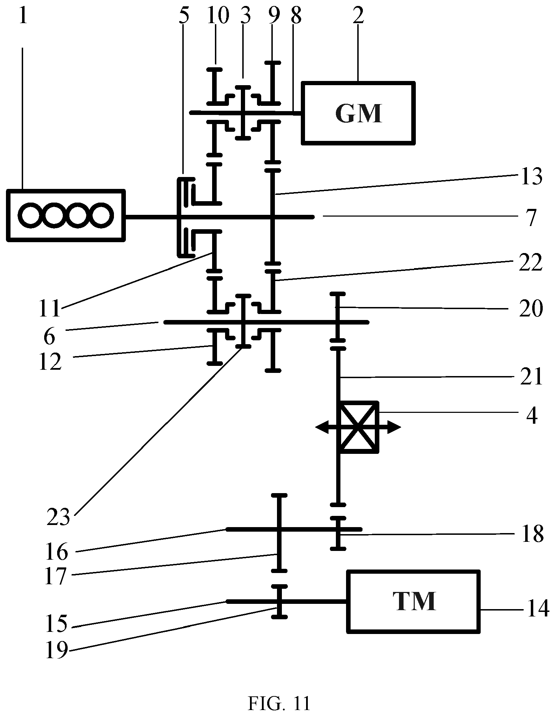

Specifically, the intermediate shaft 6 may be connected to the differential 4 by using an intermediate shaft reduction drive gear 20 fixedly connected to the intermediate shaft 6 and a main reduction gear 21 disposed on the differential 4 sequentially. The engine secondary driven gear 12 may be fixedly connected to the intermediate shaft 6 (as shown in FIG. 2 to FIG. 4), or may be idly sleeved on the intermediate shaft 6 (as shown in FIG. 11), that is, when the hybrid drive system includes a second gear shift mechanism 23, the engine secondary driven gear 12 may be idly sleeved on the intermediate shaft 6.

For example, the second motor 14 may be a drive motor, configured to connect to a battery (not shown in FIG. 4).

The engine secondary driven gear on the intermediate shaft needs to be meshed with only the engine secondary drive gear, without having to be simultaneously meshed with both the first motor secondary drive gear and the engine secondary drive gear to meet driving of the first motor and driving of the engine. Therefore, the problem that a setting position of the engine secondary driven gear is greatly limited due to a need for simultaneously meshing with two gears can be avoided, so that packaging of the engine secondary driven gear can be freer, and further, packaging of the intermediate shaft can be freer, an overall structure of the hybrid drive system is simpler and more compact, and vehicle packaging is more convenient and flexible.

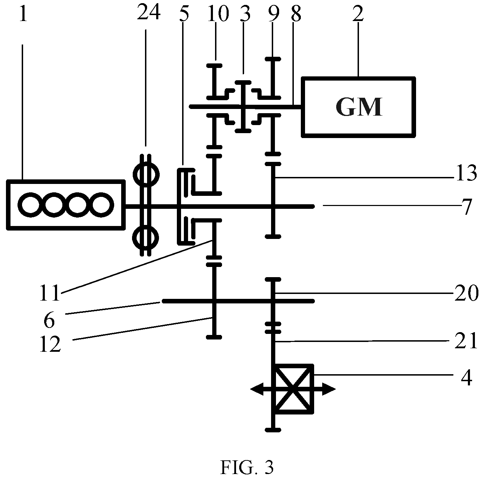

As shown in FIG. 3, the hybrid drive system may further include a torsional shock absorber 24 disposed between the drive end of the clutch 5 and the engine 1, to reduce vibration of the engine 1 and improve vehicle driving comfort.

In addition, to simplify a structure of the hybrid drive system and reduce system costs, as shown in FIG. 2 and FIG. 3, the first motor secondary drive gear 10 is disposed close to the engine 1, and the first motor primary drive gear 9 is disposed away from the engine 1.

The first motor secondary drive gear 10 is close to the engine 1 and is idly sleeved on the engine shaft 8, and is connected to the engine output shaft 7 by using the clutch 5. The first motor primary drive gear 9 is away from the engine 1 and is connected to the engine output shaft 7 by using the engine primary drive gear 13. In this way, a connection between the engine 1 and the first motor 2 can be implemented by using the generator shaft 7 and the first motor shaft 8, and the structure of the hybrid drive system is simplified and system costs are reduced without disposing another shaft.

Specifically, as shown in FIG. 4, the hybrid drive system may further include a second motor shaft 15, a second motor reduction gear shaft 16, a second motor primary reduction driven gear 17, a second motor secondary reduction drive gear 18, a shaft gear 19, the intermediate shaft reduction drive gear 20 fixedly connected to the intermediate shaft 6, and the main reduction gear 21 disposed on the differential 4.

The second motor primary reduction driven gear 17 and the second motor secondary reduction drive gear 18 are respectively fixedly connected to the second motor reduction gear shaft 16, the shaft gear 19 is fixedly connected to the second motor shaft 15, and the second motor shaft 15 is connected to the second motor 14. The second motor primary reduction driven gear 17 is meshed with the shaft gear 19, and the main reduction gear 21 is respectively meshed with the intermediate shaft reduction drive gear 20 and the second motor secondary reduction drive gear 18. The second motor 14 may be mechanically connected to the differential 4 by using the shaft gear 19, the second motor primary reduction driven gear 17, the second motor secondary reduction drive gear 18, and the main reduction gear 21 sequentially.

In an implementation, as shown in FIG. 4, the first motor primary drive gear 9, the engine primary drive gear 13, the intermediate shaft reduction drive gear 20, the main reduction gear 21, and the second motor secondary reduction drive gear 18 axially overlap with each other (that is, being radially aligned while spaced apart), and the first motor secondary drive gear 10, the engine secondary drive gear 11, the engine secondary driven gear 12, the second motor primary reduction driven gear 17, and the shaft gear 19 axially overlap with each other. In this way, the hybrid drive system has only two rows of gears, which is equivalent to compressing axial space, shortening an axial dimension of the hybrid drive system. This facilitates vehicle mounting and packaging, so that the hybrid drive system has a simple and compact structure, and a simple assembly technique.

For the hybrid drive system shown in FIG. 4, the system may use different operation modes based on different operating conditions of the vehicle, and may specifically include a single-motor drive mode, a dual-motor drive mode, a series mode, a parallel mode, a three-power source mode, and a dual-motor feedback mode (namely, an energy recovery mode).

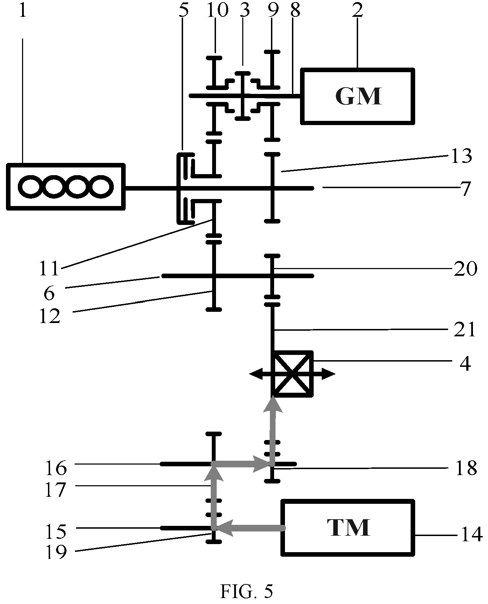

When the hybrid drive system is in a pure electric operation under a medium or low load, the system is in the single-motor drive mode. As shown in FIG. 5, the first gear shift mechanism 3 is in a middle position, the clutch 5 is disconnected, the second motor 14 independently drives the wheels, and both the engine 1 and the first motor 2 are stationary (that is, not working).

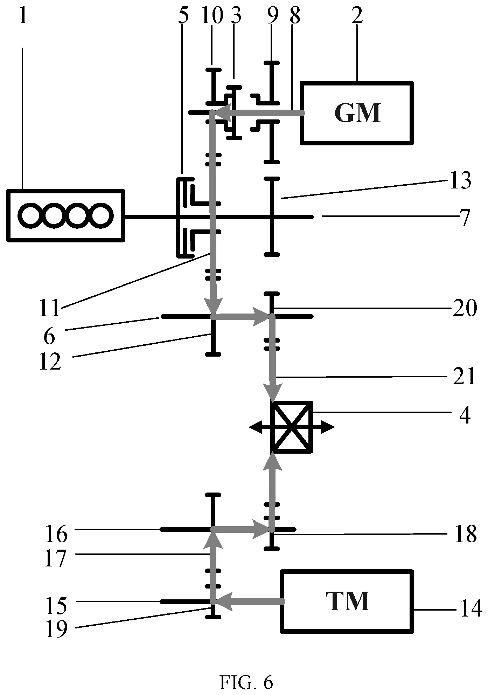

When the hybrid drive system is in a pure electric operation under a high load, the system is in the dual-motor drive mode. As shown in FIG. 6, the first gear shift mechanism 3 is in a left position and connected to the first motor secondary drive gear 10, the clutch 5 is disconnected, the first motor 2 and the second motor 14 drive the wheels together, and the engine 1 still remains in a stationary state.

When the hybrid drive system is driven purely by electricity, the single-motor drive mode or the dual-motor drive mode may be selected based on a load size, and the engine 1 is not dragged (the engine 1 being in a stationary state). In this way, the system can reduce to a single motor power, reduce motor capacity, reduce system costs, and improve drive efficiency without sacrificing power.

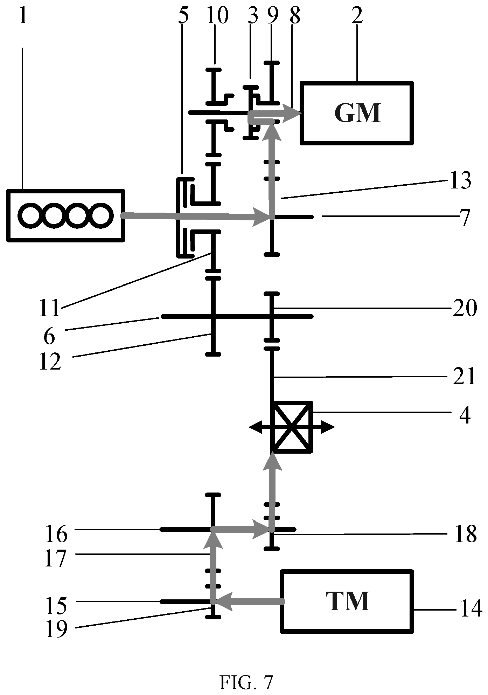

When the hybrid drive system operates in the series mode, as shown in FIG. 7, the first gear shift mechanism 3 is in a right position, the clutch 5 is disconnected, and the engine 1 is meshed with the first motor primary drive gear 9 by using the engine primary drive gear 13, to drive the first motor 2 to generate electricity. When required electric power of the second motor 14 is greater than electricity generation power of the first motor 2, the battery discharges, and the second motor 14 drives the wheels. When required electric power of the second motor 14 is less than electricity generation power of the first motor 2, the electricity generation power of the first motor 2 is provided to the second motor 14 to drive the wheels, and excess electricity generation power is used to charge the battery.

In the dual-motor drive mode, when driving the wheels, the first motor 2 uses the first motor secondary drive gear 10 for torque transmission. When the engine 1 and the first motor 2 work in series (that is, are in the series mode), torque of the engine 1 is transmitted by using the first motor primary drive gear 9. In other words, a drive path and an electricity generation path of the first motor 2 are different. In this way, speed ratio matching for the pure electric drive and series electricity generation of the first motor 2 can be more flexible and optimal.

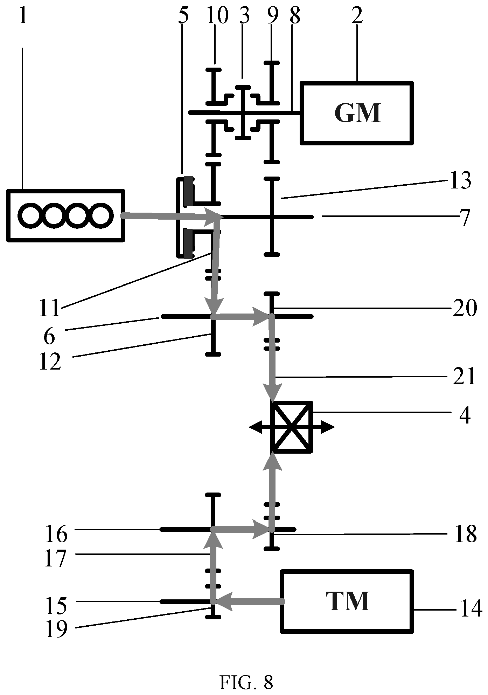

When the hybrid drive system is in the parallel mode, as shown in FIG. 8, the first gear shift mechanism 3 is in a middle position, the first motor 2 is stationary, and the clutch 5 is engaged. The engine 1 transmits torque to the differential 4 by using the engine secondary drive gear 11, the engine secondary driven gear 12, the intermediate shaft reduction drive gear 20, and the main reduction gear 21 sequentially.

When the hybrid drive system is in the parallel mode, the first gear shift mechanism 3 is in the middle position, and the first motor 2 is disconnected from the engine 1, so that there is no loss under no load, thereby reducing motor drag losses.

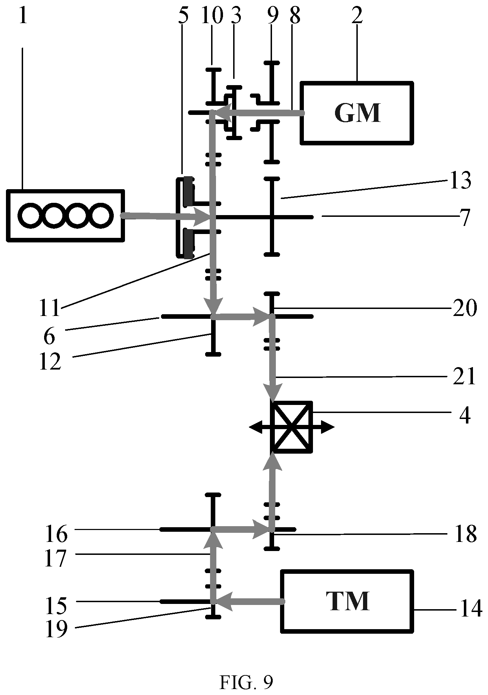

When the hybrid drive system operates in the three-power source mode, as shown in FIG. 9, the first gear shift mechanism 3 is in a left position, and the clutch 5 is engaged. The first motor 2 is connected to the first motor secondary drive gear 10 by using the first gear shift mechanism 3, and transmits torque to the differential 4 by using the engine secondary drive gear 11, the engine secondary driven gear 12, the intermediate shaft reduction drive gear 20, and the main reduction gear 21, so that the first motor 2, the engine 1, and the second motor 14 drive the wheels together.

When the hybrid drive system operates in the three-power source mode, the clutch 5 needs to transmit torque on a drive wheel path of the engine 1, and the clutch 5 does not need to transmit torque on a drive wheel path of the first motor 2. Therefore, torque capacity of the clutch 5 is reduced, costs of the clutch 5 are reduced, and reliability of the clutch 5 is improved.

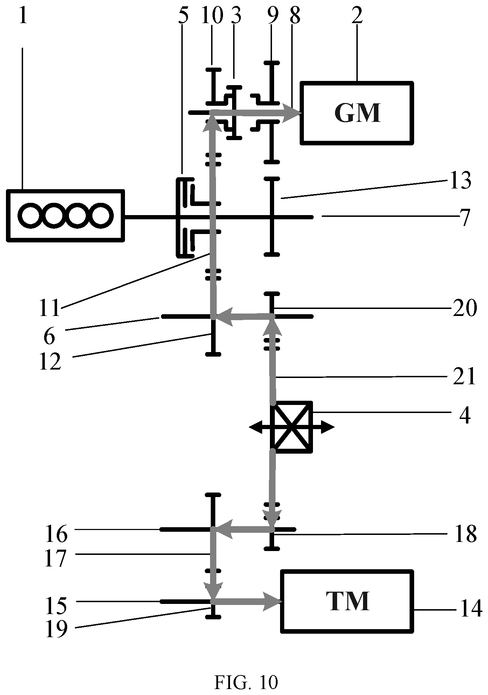

When the vehicle is braking, the hybrid drive system enters the dual-motor feedback mode. As shown in FIG. 10, the engine 1 is shut down, and the differential 4 absorbs kinetic energy during a braking process, and transmits the kinetic energy to the first motor 2 and the second motor 14. The two motors generate electricity with negative torque to charge the battery, so that the first motor and the second motor can recover energy simultaneously, and energy recovery capability is improved, thereby improving energy utilization.

As shown in FIG. 11, the hybrid drive system may further include an engine primary driven gear 22 and a second gear shift mechanism 23. The engine primary driven gear 22 is idly sleeved on the intermediate shaft 6, the second gear shift mechanism 23 is disposed on the intermediate shaft 6, and is located between the engine secondary driven gear 12 and the engine primary driven gear 22, and the engine primary driven gear 22 is located between the second gear shift mechanism 23 and the intermediate shaft reduction drive gear 20. The engine primary drive gear 13 is meshed with the engine primary driven gear 22. In this case, the engine secondary driven gear 12 is idly sleeved on the intermediate shaft 6.

In an implementation, as shown in FIG. 11, the first motor primary drive gear 9, the engine primary drive gear 13, the engine primary driven gear 22, the second motor primary reduction driven gear 17, and the shaft gear 19 axially overlap with each other, the first motor secondary drive gear 10, the engine secondary drive gear 11, and the engine secondary driven gear 12 axially overlap with each other, and the intermediate shaft reduction drive gear 20, the main reduction gear 21, and the second motor secondary reduction drive gear 18 axially overlap with each other. In this way, the hybrid drive system has only three rows of gears, which is equivalent to compressing axial space, shortening an axial dimension of the hybrid drive system. This facilitates vehicle mounting and packaging, so that the hybrid drive system has a simple and compact structure, and a simple assembly technique.

For the hybrid drive system shown in FIG. 11, the system may use different operation modes based on different operating conditions of the vehicle, and may specifically include a single-motor drive mode, a dual-motor drive mode, a series mode, a parallel primary single-motor mode, a parallel primary dual-motor mode, a parallel secondary single-motor mode, a parallel secondary dual-motor mode, and an energy recovery mode. Both the parallel primary dual-motor mode and the parallel secondary dual-motor mode belong to a three-power source mode.

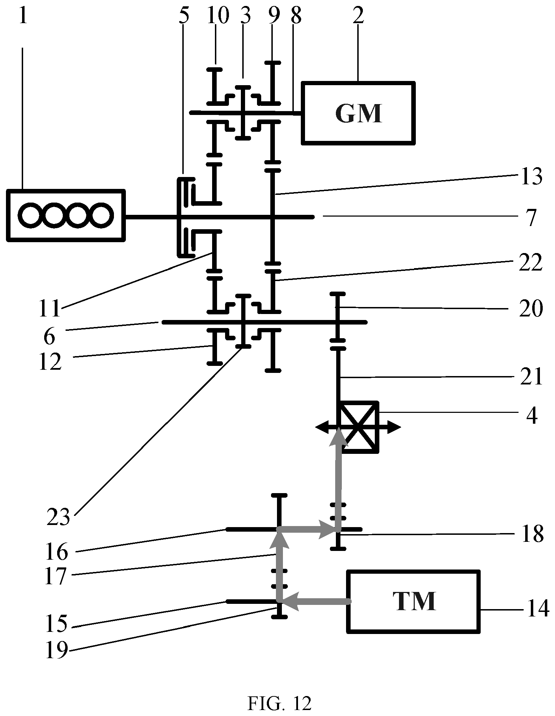

When the hybrid drive system is in a pure electric operation under a medium or low load, the system is in the single-motor drive mode. As shown in FIG. 12, both the first gear shift mechanism 3 and the second gear shift mechanism 23 are in middle positions, the clutch 5 is disconnected, the second motor 14 independently drives the wheels, and both the engine 1 and the first motor 2 are stationary.

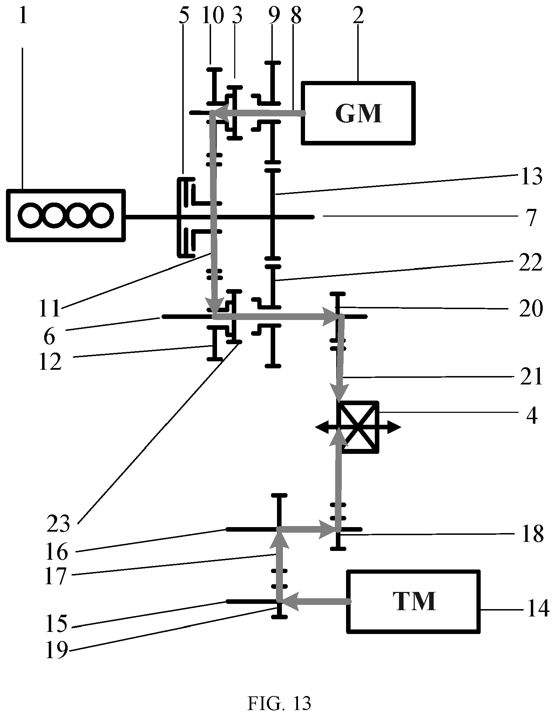

When the hybrid drive system is in a pure electric operation under a high load, the system is in the dual-motor drive mode. As shown in FIG. 13, the first gear shift mechanism 3 is in a left position and connected to the first motor secondary drive gear 10, the second gear shift mechanism 23 is in a left position and connected to the engine secondary driven gear 12, the clutch 5 is disconnected, the first motor 2 and the second motor 14 drive the vehicle together, and the engine 1 still remains in a stationary state.

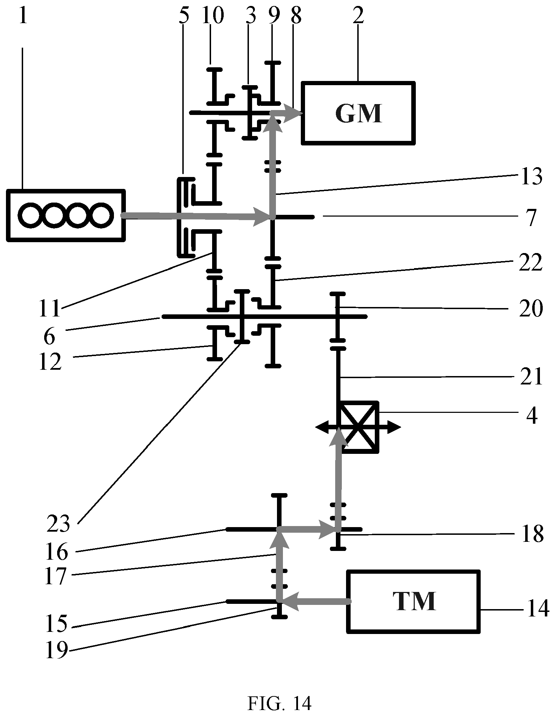

When the hybrid drive system operates in the series mode, as shown in FIG. 14, the first gear shift mechanism 3 is in a right position, the second gear shift mechanism 23 is in a middle position, the clutch 5 is disconnected, and the engine 1 is meshed with the first motor primary drive gear 9 by using the engine primary drive gear 13, to drive the first motor 2 to generate electricity. When required electric power of the second motor 14 is greater than electricity generation power of the first motor 2, the battery discharges, and the second motor 14 drives the wheels. When required electric power of the second motor 14 is less than electricity generation power of the first motor 2, the electricity generation power of the first motor 2 is provided to the second motor 14 to drive the wheels, and excess electricity generation power is used to charge the battery.

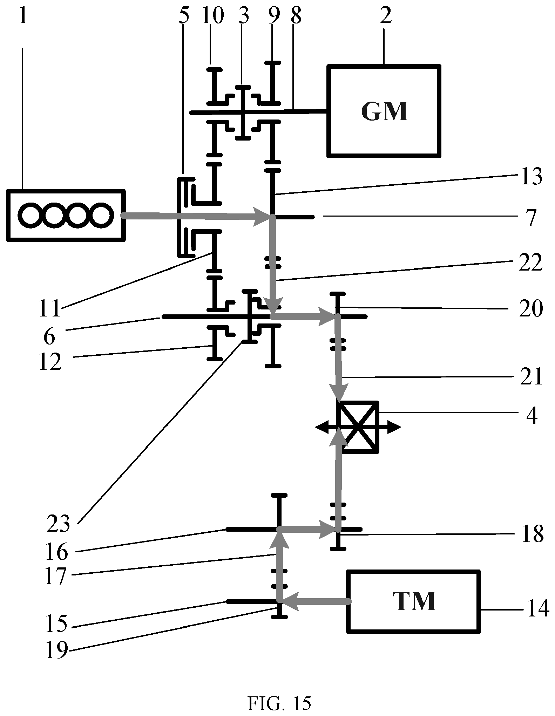

When the hybrid drive system is in parallel primary with medium-to-low-load requirement driving, the system is in the parallel primary single-motor mode. As shown in FIG. 15, the first gear shift mechanism 3 is in a middle position or a left position, the clutch 5 is disconnected, and the second gear shift mechanism 23 is in a right position, so that the intermediate shaft 6 is engaged with the engine primary driven gear 22, the first motor 2 is disconnected and stationary, and the engine 1 transmits torque to the differential 4 by using the engine primary drive gear 13, the engine primary driven gear 22, the intermediate shaft reduction drive gear 20, and the main reduction gear 21 sequentially. In addition, the second motor 14 is connected to the differential 4 by using the shaft gear 19, the second motor primary reduction driven gear 17, and the second motor secondary reduction drive gear 18. The engine 1 works in a high-efficiency area. When torque in the high-efficiency area of the engine 1 does not meet a wheel torque requirement, the second motor 14 discharges and drives the vehicles together with the engine 1. When torque in the high-efficiency area of the engine 1 can meet the wheel torque requirement, the second motor 14 generates electricity and charges the battery. The second motor 14 performs "peak shaving and valley filling" on torque, so that the engine 1 works in the high-efficiency area.

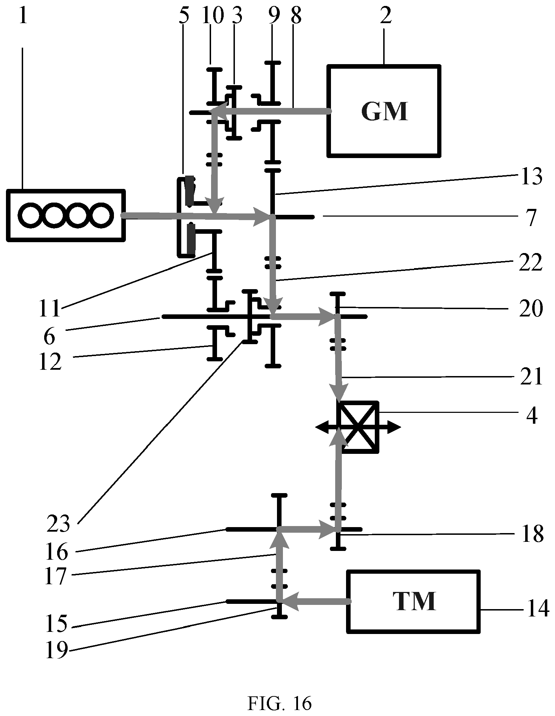

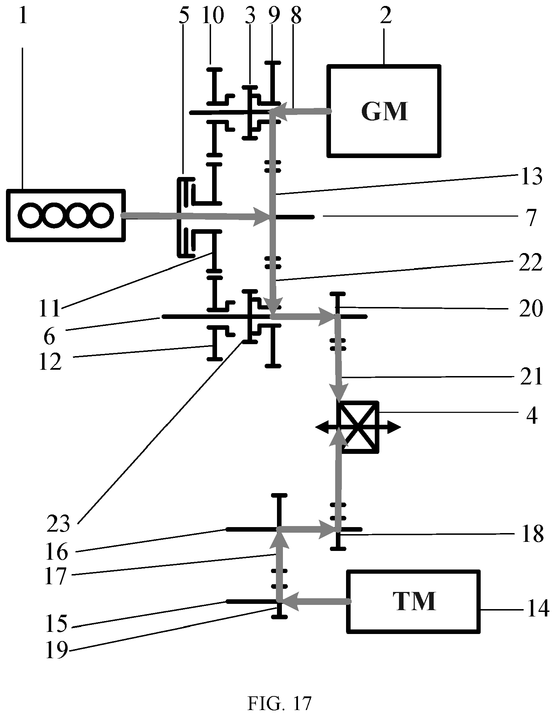

When the hybrid drive system is in parallel primary with high-load requirement driving, the system is in the parallel primary dual-motor mode. When the vehicle is driven under a high load and a current remaining battery level of the battery is greater than a first preset battery level threshold (namely, a relatively high battery level), as shown in FIG. 16, the first gear shift mechanism 3 is in a left position, the clutch 5 is engaged, and the second gear shift mechanism 23 is in a right position, so that the intermediate shaft 6 is engaged with the engine primary driven gear 22. The first motor 2 is connected to the first motor secondary drive gear 10 by using the first gear shift mechanism 3, and transmits torque to the differential 4 by using the clutch 5, the engine primary drive gear 13, the engine primary driven gear 22, the intermediate shaft reduction drive gear 20, and the main reduction gear 21, so that the first motor 2 drives the wheels together with the engine 1 and the second motor 14 after being reduced by a first motor primary ratio. Optionally, when the vehicle is driven under a high load and a current remaining battery level of the battery is greater than the first preset battery level threshold, as shown in FIG. 17, the first gear shift mechanism 3 is in a right position, the clutch 5 is disconnected or engaged, and the second gear shift mechanism 23 is in a right position, so that the intermediate shaft 6 is engaged with the engine primary driven gear 22. The first motor 2 is connected to the first motor primary drive gear 9 by using the first gear shift mechanism 3, and transmits torque to the differential 4 by using the engine primary drive gear 13, the engine primary driven gear 22, the intermediate shaft reduction drive gear 20, and the main reduction gear 21 sequentially, so that the first motor 2 drives the wheels together with the engine 1 and the second motor 14 after being reduced by a first motor secondary ratio.

When the hybrid drive system is driven under parallel primary, parallel driving of the engine 1 and the second motor 14 can be implemented based on a current power requirement. The first motor 2 is disconnected, or the engine 1, the first motor 2, and the second motor 14 drive together. In addition, when the first motor 2 participates in driving, two kinds of speed ratio drives may be selected based on a load size to improve primary parallel power performance, so that the hybrid electrical drive system is more efficient.

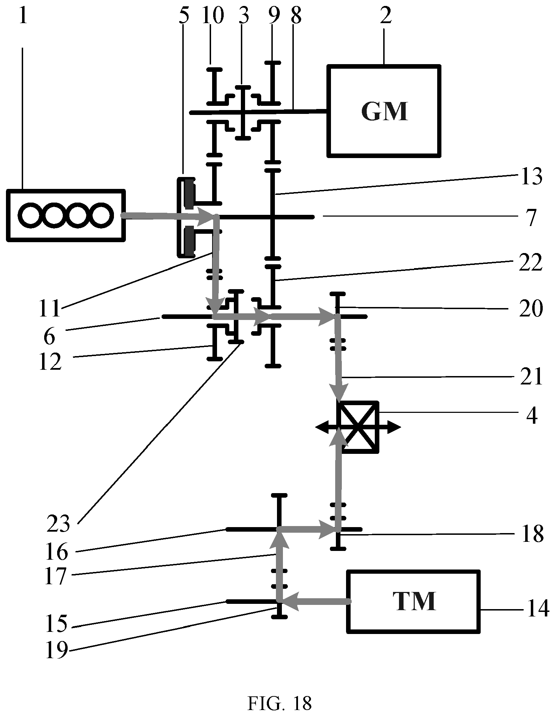

When the hybrid drive system is in parallel secondary with medium-to-low-load requirement driving, the system is in the parallel secondary single-motor mode. As shown in FIG. 18, the first gear shift mechanism 3 is in a middle position, the first motor 2 is stationary, the clutch 5 is engaged, and the second gear shift mechanism 23 is in a left position, so that the intermediate shaft 6 is engaged with the engine secondary driven gear 12. The first motor 2 is disconnected and stationary. The engine 1 transmits torque to the differential 4 by using the engine secondary drive gear 11, the engine secondary driven gear 12, the intermediate shaft reduction drive gear 20, and the main reduction gear 21 sequentially. The second motor also performs "peak shaving and valley filling" on torque, so that the engine 1 works in the high-efficiency area.

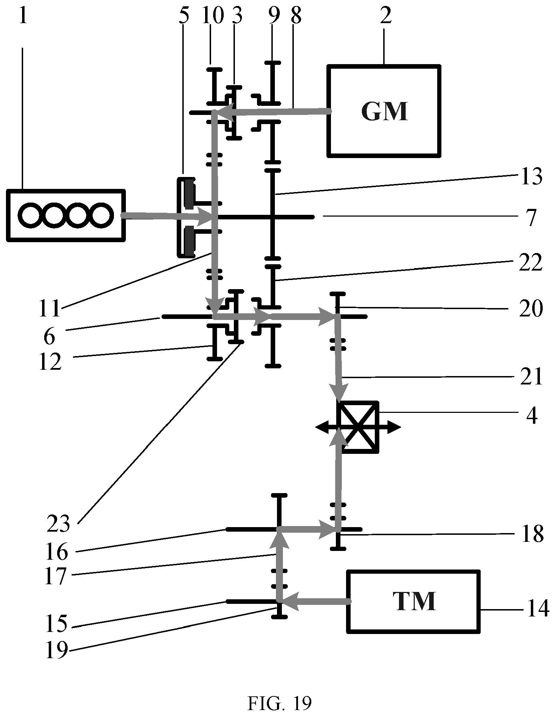

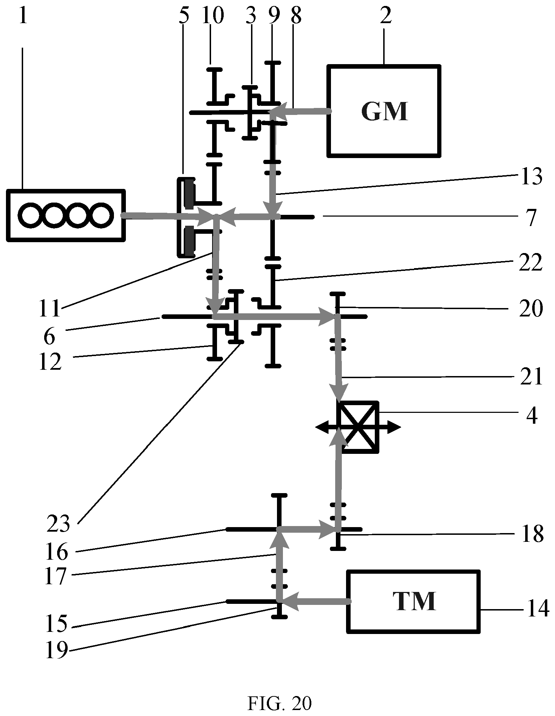

When the hybrid drive system is in parallel secondary with high-load requirement driving, the system is in the parallel secondary dual-motor mode. When the vehicle is driven under a high load and a current remaining battery level of the battery is greater than a second preset battery level threshold (namely, a relatively high battery level), as shown in FIG. 19, the first gear shift mechanism 3 is in a left position, the clutch 5 is engaged, and the second gear shift mechanism 23 is in a left position, so that the intermediate shaft 6 is engaged with the engine secondary driven gear 12. The first motor 2 is connected to the first motor secondary drive gear 10 by using the first gear shift mechanism 3, and transmits torque to the differential 4 by using the engine secondary drive gear 11, the engine secondary driven gear 12, the intermediate shaft reduction drive gear 20, and the main reduction gear 21, so that the first motor 2 drives the vehicle together with the engine 1 and the second motor 14 after being reduced by a first motor primary ratio. Optionally, when the vehicle is driven under a high load and a current remaining battery level of the battery is greater than the second preset battery level threshold, as shown in FIG. 20, the first gear shift mechanism 3 is in a right position, the clutch 5 is engaged, and the second gear shift mechanism 23 is in a left position, so that the intermediate shaft 6 is engaged with the engine secondary driven gear 12. The first motor 2 is connected to the first motor primary drive gear 9 by using the first gear shift mechanism 3, and transmits torque to the differential 4 by using the engine primary drive gear 13, the engine secondary drive gear 11, the engine secondary driven gear 12, the intermediate shaft reduction drive gear 20, and the main reduction gear 21, so that the first motor 2 drives the wheels together with the engine 1 and the second motor 14 after being reduced by a first motor secondary ratio.

When the hybrid drive system is driven under parallel secondary, parallel driving of the engine 1 and the second motor 14 can be implemented based on a current power requirement. The first motor 2 is disconnected, or the engine 1, the first motor 2, and the second motor 14 drive together. In addition, when the first motor 2 participates in driving, two kinds of speed ratio drives may be selected based on a load size to improve secondary parallel power performance, so that the hybrid electrical drive system is more efficient.

In addition, the present disclosure further provides a vehicle, including the hybrid drive system provided in the present disclosure.

The foregoing describes in detail the preferred implementations of the present disclosure with reference to the accompanying drawings. However, the present disclosure is not limited to specific details in the foregoing implementations. A plurality of simple variations can be made to the technical solutions of the present disclosure within the technical concept scope of the present disclosure, and all these simple variations fall within the protection scope of the present disclosure.

In addition, it will be noted that the specific technical features described in the foregoing specific implementations may be combined in any proper manner without a contradiction. To avoid unnecessary repetition, various possible combination manners are not otherwise described in the present disclosure.

In addition, various different implementations of the present disclosure may be combined arbitrarily, and the combination shall also be considered as the content disclosed in the present disclosure, provided that the combination is not contrary to the idea of the present disclosure.

## Claims

1. A hybrid drive system (100), comprising:
an engine (1), a first motor (2), a first motor secondary drive gear (10), an engine secondary drive gear (11), and an engine secondary driven gear (12), wherein
the engine (1) is drivingly connected to the engine secondary drive gear (11), the first motor (2) is drivingly connected to the first motor secondary drive gear (10), and the engine secondary drive gear (11) is respectively meshed with the first motor secondary drive gear (10) and the engine secondary driven gear (12).

2. The system (100) according to claim 1, the system (100) further comprising a first gear shift mechanism (3), a first motor shaft (8), and a first motor primary drive gear (9), wherein
the first motor primary drive gear (9) and the first motor secondary drive gear (10) are respectively idly sleeved on the first motor shaft (8), the first gear shift mechanism (3) is disposed on the first motor shaft (8), and is located between the first motor primary drive gear (9) and the first motor secondary drive gear (10), the first gear shift mechanism (3) is selectively engaged with the first motor primary drive gear (9) or the first motor secondary drive gear (10), and the first motor shaft (8) is connected to the first motor (2).

3. The system (100) according to claim 2, the system (100) further comprising a clutch (5), an engine output shaft (7), and an engine primary drive gear (13), wherein
the engine output shaft (7) is connected to the engine (1), the engine secondary drive gear (11) is idly sleeved on the engine output shaft (7), the engine primary drive gear (13) is fixedly connected to the engine output shaft (7), the clutch (5) is disposed on the engine output shaft (7), a drive end of the clutch (5) is connected to the engine (1), a driven end of the clutch (5) is connected to the engine secondary drive gear (11), and the engine primary drive gear (13) is meshed with the first motor primary drive gear (9).

4. The system (100) according to claim 3, the system (100) further comprising a differential (4), an intermediate shaft (6), and a second motor (14), wherein
the engine secondary driven gear (12) is connected to the intermediate shaft (6); and
the differential (4) is respectively mechanically connected to the intermediate shaft (6) and the second motor (14).

5. The system (100) according to claim 4, the system (100) further comprising a second motor shaft (15), a second motor reduction gear shaft (16), a second motor primary reduction driven gear (17), a second motor secondary reduction drive gear (18), a shaft gear (19), an intermediate shaft reduction drive gear (20) fixedly connected to the intermediate shaft (6), and a main reduction gear (21) disposed on the differential (4), wherein
the second motor primary reduction driven gear (17) and the second motor secondary reduction drive gear (18) are respectively fixedly connected to the second motor reduction gear shaft (16), the shaft gear (19) is fixedly connected to the second motor shaft (15), and the second motor shaft (15) is connected to the second motor (14); and
the second motor primary reduction driven gear (17) is meshed with the shaft gear (19), and the main reduction gear (21) is respectively meshed with the intermediate shaft reduction drive gear (20) and the second motor secondary reduction drive gear (18).

6. The system (100) according to claim 5, the first motor primary drive gear (9), the engine primary drive gear (13), the intermediate shaft reduction drive gear (20), the main reduction gear (21), and the second motor secondary reduction drive gear (18) axially overlapping with each other, and the first motor secondary drive gear (10), the engine secondary drive gear (11), the engine secondary driven gear (12), the second motor primary reduction driven gear (17), and the shaft gear (19) axially overlapping with each other.

7. The system (100) according to claim 5 or 6, the system (100) further comprising an engine primary driven gear (22) and a second gear shift mechanism (23), wherein
the engine primary driven gear (22) is idly sleeved on the intermediate shaft (6), the engine secondary driven gear (12) is idly sleeved on the intermediate shaft (6), the second gear shift mechanism (23) is disposed on the intermediate shaft (6), and is located between the engine secondary driven gear (12) and the engine primary driven gear (22), and the engine primary driven gear (22) is located between the second gear shift mechanism (23) and the intermediate shaft reduction drive gear (20); and
the engine primary drive gear (13) is meshed with the engine primary driven gear (22).

8. The system (100) according to claim 7, the first motor primary drive gear (9), the engine primary drive gear (13), the engine primary driven gear (22), the second motor primary reduction driven gear (17), and the shaft gear (19) axially overlapping with each other, the first motor secondary drive gear (10), the engine secondary drive gear (11), and the engine secondary driven gear (12) axially overlapping with each other, and the intermediate shaft reduction drive gear (20), the main reduction gear (21), and the second motor secondary reduction drive gear (18) axially overlapping with each other.

9. The system (100) according to any one of claims 2 to 8, the first motor secondary drive gear (10) being disposed close to the engine (1), and the first motor primary drive gear (9) being disposed away from the engine (1).

10. A vehicle, comprising the hybrid drive system (100) according to any one of claims 1 to 9.
